Europäisches Patentamt

European Patent Office

Office européen des brevets

(11) Publication number: **0 050 522**
**B1**

# EUROPEAN PATENT SPECIFICATION

(45) Date of publication of patent specification: **12.12.84**

(51) Int. Cl.³: **B 29 H 5/02**

(21) Application number: **81304924.4**

(22) Date of filing: **20.10.81**

(54) Method for regeneration and re-utilization of discharged gas and arrangement employed therefor.

(30) Priority: **21.10.80 JP 148048/80**

(43) Date of publication of application:
**28.04.82 Bulletin 82/17**

(45) Publication of the grant of the patent:
**12.12.84 Bulletin 84/50**

(84) Designated Contracting States:
**DE FR GB IT**

(56) References cited:
**US-A-3 579 626**
**US-A-3 608 624**
**US-A-3 942 922**
**US-A-4 126 657**
**US-A-4 222 721**

(73) Proprietor: **SUMITOMO RUBBER INDUSTRIES LIMITED**
**No. 1-1, Tsutsui-cho 1-chome**
**Chuo-ku Kobe-shi Hyogo-ken (JP)**

(72) Inventor: **Sakon, Tohatirou**
**15-12, Heiwadai-cho, 2-chome**
**Nagata-ku Kobe-shi Hyogo-ken (JP)**
Inventor: **Oyobe, Ikuo**
**12, Aza Honen**
**Shirakawa-shi Fukushima-ken (JP)**

(74) Representative: **Allard, Susan Joyce et al**
**BOULT, WADE & TENNANT 27 Furnival street**
**London EC4A 1PQ (GB)**

Courier Press, Leamington Spa, England.

## Description

The present invention generally relates to a method for the regeneration and re-utilization of discharged gas, and more particularly, to a method for the regeneration and re-utilization of gas discharged from a vulcanizing unit in a vulcanizing process which employs an inert gas in one of the vulcanizing steps of elastomer products, especially pneumatic tires etc., and an arrangement employed therefor.

Conventionally, in the vulcanization of elastomer products such as pneumatic tires, etc. a process employing a combination of steam or hot water and inert gas has been used, but in this known process, the used inert gas is undesirably discharged into the atmosphere without being re-utilized.

On the other hand, in a preshaping process prior to commencing the vulcanization of elastomer products, for example, pneumatic tires and the like, compressed air or saturated steam is employed as an expanding medium. However, the conventional expanding medium as described above tends to adversely affect the qualities of the elastomer products, since not only does such an expanding medium adversely affect the inner surfaces of expandable bag-like members or bladders used in the vulcanization process (referred to as bladders hereinbelow) and thereby reduce the life thereof, but the preshaping, for example, by saturated steam imparts a large variation in the configuration and state of the elastomer products due to cooling of the bladders.

US—A—4222721 and US—A—4126657 relate to apparatus and a method, respectively, for curing tires or similar vulcanized products in a press or autoclave equipped with separable molds with inserted bladders, tubes, bags or bladderless center mechanisms. During the principal shaping and vulcanizing period of the tire curing cycle, the bladder is first filled with steam to conform the bladder and tire to the mold and begin the cure. The steam is then flushed and replaced with water at a high pressure and a high temperature to continue pressure molding and curing of the tire. In the next phase of the curing cycle, inert gas at a high pressure is introduced to force the water from the bladder without vaporization or significant loss of heat, back to storage facilities for subsequent re-use. The inert gas is evacuated from the bladder usually by means of high pressure cold water for the final cooling and shaping period of the cycle. Energy is thereby conserved by avoiding mixing the hot water with the cold. The inert gas is recovered for subsequent use and any water contained therein is drained off.

We have developed a method for the regeneration and re-utilization of discharged gas, which is capable of achieving resource saving effects, with a simultaneous improvement in the life of the bladders used in the vulcanization, and also of the qualities of the resulting elastomer products.

According to the present invention there is provided a method for the regeneration and re-utilization of discharged gas for use in a vulcanization which employs an inert gas which method comprises the steps of regenerating a mixture of inert gas discharged from a vulcanizing unit and a vulcanizing medium by subjecting the mixture to steam separation subjecting an elastomer product mounted in a metal mould to preshaping by supplying the inert gas obtained from the steam separation to the vulcanizing unit prior to beginning the vulcanization, and subjecting the inert gas obtained from the steam separation to supplementary pressurization by inert gas obtained from an inert gas generating unit when the said inert gas obtained from the steam separation is to be supplied to the vulcanizing unit.

In another aspect, the present invention provides an arrangement for the regeneration and re-utilization of discharged gas for use in a vulcanization employing inert gas in part of the vulcanization of elastomer products, which arrangement comprises a high pressure gas recovery line for collecting a mixture of inert gas discharged from a vulcanizing unit and vulcanizing medium, a steam separator coupled to the high pressure gas recovery line for subjecting the mixture to steam separation, a low pressure gas line for supplying the inert gas obtained from the steam separation to the vulcanizing unit, and a gas supplementary pressure line connecting the low pressure gas line with an inert gas generating unit.

The present invention will be further described with reference to the following description taken in conjunction with the preferred embodiment thereof with reference to the accompanying drawings, in which:—

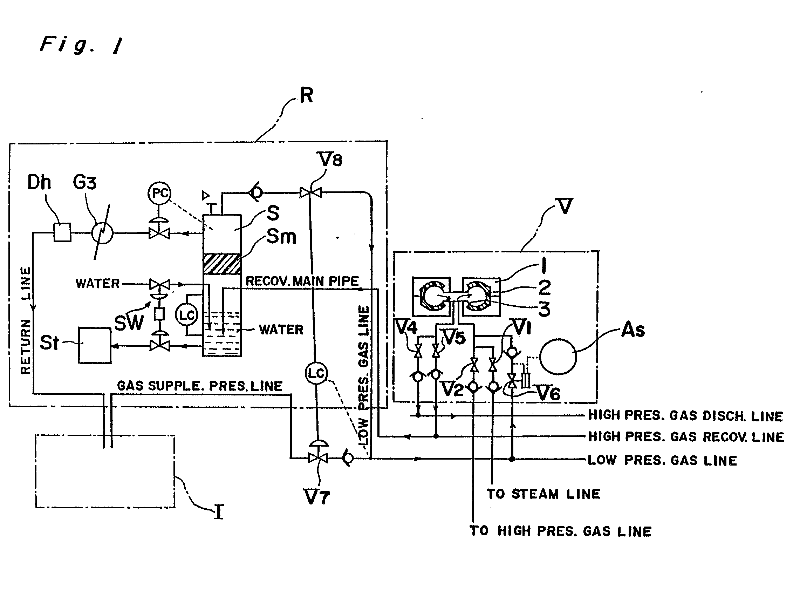

Figure 1 is a block diagram explaining the process for the vulcanizing of elastomer products and the construction of an apparatus employed therefor according to a preferred embodiment of the present invention.

In the first place, it is to be noted that the elastomer products include, for example, pneumatic tires and vulcanizable moulded items, and the vulcanizing medium may be hot water, steam or cooling water while the expandable bag-like member may be, for example, a curing bag or bladder employed in the vulcanization of pneumatic tires, which curing bag or bladder is disposed between the vulcanizing medium and the elastometer product when there is a possibility that the life of the elastomer product will be adversely affected by surface deterioration through the direct contact of the elastomer product with the heating medium, especially steam.

The inert gas may be one mainly composed of nitrogen, which can be produced by known methods, for example, the burning furnace system in which a fuel gas such as propane gas or the like is burned in a furnace, and the exhaust gas therefrom is cooled to obtain the inert gas.

Referring to Figure 1, the method for the storage and re-utilization of discharged gas, and the apparatus employed therefor according to the present invention will be described hereinbelow.

In Figure 1, there is shown, at the right hand side thereof, a vulcanizing unit V which generally includes a metal mould 1 in which a pneumatic tire 2 to be processed is accommodated, and pipe lines respectively leading through corresponding valves V4, V5, V2, V1 and V6 to a high pressure gas discharge line, a high pressure gas recovery line, a high pressure gas line, a steam line and a low pressure gas line. The pipe lines communicate with a space inside the tire 2, through a curing bag or bladder 3 provided in contact with the inner wall of the tire 2.

More specifically, the process for vulcanization of Figure 1 further comprises, in addition to an inert gas generating unit I (surrounded by chainlink lines) and the vulcanizing unit V described above, an inert gas recovery unit R which includes a steam separator S of a pressure vessel construction comprising a mist separator Sm, a water feeding mechanism Sw, a water level controller LC and a hot water tank St, a return line connecting a low pressure storage tank (not shown) in the inert gas generating unit I with the steam separator S through a dehumidifier Dh, a cooler G3 and a pressure controller PC. The high pressure gas recovery line is connected to the inert side of the metal mould 1 through the valve V5 provided in parallel with the valve V4 for the high pressure gas discharge line, and is also connected to the steam separator S through a recovery main pipe, while the low pressure gas line communicates with the inner side of the metal mould 1 through the valve V6 and also, with the steam separator S, and is further connected to the low pressure storage tank (not shown) of the generating unit I through an automatic control valve V7 and a gas supplementary pressure line, with the valve V7 being further connected to a valve V8 provided in the low pressure gas line through a pressure controller.

The arrangement of Figure 1 is adapted to function as follows.

Upon termination of the heating process in the vulcanization of the tire 2 mounted between the metal mould 1 and bladder 3, the valve V5 for the high pressure gas recovery line is opened (in this case, the valve V4 for the high pressure gas discharge line is closed), and the cooling water for the subsequent process is fed into the tire 2 through the bladder 3, and the mixture of the inert gas and steam, and the mixture of the inert gas and cooling water enter the high pressure gas recovery line so as to be fed into the steam separator S in the inert gas recovery unit R. In the above case, the mixtures as described above are not all collected, but recovered only for a predetermined period of time, for example, for about one minute before entering the discharge process. The high pressure gas recovery line is provided for each vulcanizing unit separately from the existing discharge line, and includes the valve V5 (automatic valve for recovery), a control circuit (not shown) and the return main pipe, which has a sufficient capacity (for example, an inner pipe flow rate of 3 to 20 m/sec and more preferably, of 5 to 10 m/sec) for the prevention of circuit loss.

The mixtures as referred to above are subjected to steam separation by the steam separator S, and inert gas under a low pressure for example, 2.97—5.91 bar $(2 \sim 5 \text{ kg/cm}^2\text{G})$ and at temperatures of about 40 to 120°C and a humidity of 100% is recovered and introduced into the low pressure gas line. The low pressure gas line is maintained under a predetermined pressure by the automatic control valve V8 by receiving a signal from the pressure controller.

Before beginning the vulcanization, the valve V6 for the low pressure gas line is opened, and the inert gas pressurized so as to have a desired green tire shaping pressure, for example, 1.11—3.95 bar $(0.1 \sim 3 \text{ kg/cm}^2\text{G})$ by the operating air signal As preliminarily set as desired, is supplied into the green tire 2 mounted on the lower mould through the bladder 3 for preshaping the green tire. The preshaping by the inert gas as described above is free from the disadvantages in conventional shaping by compressed air or saturated steam, such as shortening the life of the bladders, adverse effects on the qualities of the tires due to large deviations in the shapes or preshaping condition of the bladder resulting from undesirable cooling of the bladders. The surplus inert gas in the recovery unit enters the return line, and, after cooling by the cooler G3 and dehumidification by the dehumidifier Dh, is fed into the low pressure storage tank (not shown) of the inert gas generating unit I. The return mechanism as described above is not necessarily required, if the inert gas is all consumed for the preshaping at all times.

The low pressure gas line is accompanied by the gas supplementary pressure line, which is connected from the low pressure tank mentioned earlier of the inert gas generating unit I to the low pressure gas line through the automatic control valve V7, and arranged to supply the low pressure gas to the low pressure gas line by receiving a signal from the pressure controller so as to maintain the desired shaping pressure for the tire at the starting of the preshaping.

In the inert gas recovery unit R, hot water obtained using the waste heat of steam as a result of the steam separation may be stored in the hot water storage tank St so as to be suitably re-utilized for boilers, heating, temperature control devices, etc.

According to the arrangement of Figure 1, in the vulcanizing process utilizing an inert gas in part of the vulcanizing steps of elastomer products, the inert gas discharged from the vulcanizing unit is subjected to steam separation so that it can be utilized for preshaping prior to beginning the vulcanization of elastomer products, and thus, energy cost may be saved by about 30% to 40% as compared with that in the conventional vulcanizing processes with simultaneous improvements in the life of the bladders for vulcanization, and also of the qualities of the resulting elastomer products.

It should be noted here that the inert gas generating unit I described as employed in the embodiment of Figure 1 may be replaced by a nitrogen gas generating unit including a liquid $N_2$ storage tank coupled, through a carburettor and a pressure reduction valve, to a nitrogen receiving tank which is further connected to the high pressure gas line via a valve associated with a pressure controller, although the modified arrangement is not particularly shown here. In the above modified arrangement, liquid nitrogen contained in the liquid $N_2$ storage tank is formed, through the carburettor and pressure reduction valve, into nitrogen gas, which is utilized for the same purpose as in the inert gas in the embodiment of Figure 1 through the change-over valves in the similar manner. In the above case, nitrogen at a high purity may be obtained.

## Claims

1. A method for the regeneration and re-utilization of discharged gas for use in a vulcanization which employs an inert gas which method comprises the steps of regenerating a mixture of inert gas discharged from a vulcanizing unit and a vulcanizing medium by subjecting the mixture to steam separation, subjecting an elastomer product mounted in a metal mould to preshaping by supplying the inert gas obtained from the steam separation to the vulcanizing unit prior to beginning the vulcanization, and subjecting the inert gas obtained from the steam separation to supplementary pressurization by inert gas obtained from an inert gas generating unit when the said inert gas obtained from steam separation is to be supplied to the vulcanizing unit.

2. An arrangement for the regeneration and re-utilization of discharged gas for use in a vulcanization employing inert gas in part of the vulcanization of elastomer products, which arrangement comprises a high pressure gas recovery line for collecting a mixture of inert gas discharged from a vulcanizing unit and vulcanizing medium, a steam separator coupled to the high pressure gas recovery line for subjecting the mixture to steam separation, a low pressure gas line for supplying the inert gas obtained from the steam separation to the vulcanizing unit, and a gas supplementary pressure line connecting the low pressure gas line with an inert gas generating unit.

## Revendications

1. Procédé de régénération et de réutilisation d'un gaz déchargé destiné à servir dans une vulcanisation utilisant un gaz inerte, ce procédé comprenant les étapes consistant à régénérer un mélange de gaz inerte déchargé d'une unité de vulcanisation et d'un milieu de vulcanisation, à soumettre le mélange à une séparation de la vapeur d'eau, à soumettre un produit élastomère monté dans un moule métallique à un façonnage préliminaire par introduction du gaz inerte, obtenu à partir de la séparation de la vapeur d'eau, dans l'unité de vulcanisation avant le début de la vulcanisation, et à soumettre le gaz inerte obtenu de la séparation de la vapeur d'eau à une pressurisation supplémentaire par du gaz inerte obtenu d'une unité engendrant du gaz inerte quand ledit gaz inerte, provenant de la séparation de la vapeur d'eau, doit être fourni à l'unité de vulcanisation.

2. Agencement pour la régénération et la réutilisation d'un gaz décharge destiné à servir dans une vulcanisation utilisant du gaz inerte dans une partie de la vulcanisation de produits élastomères, ledit agencement comprenant un conduit de récupération de gaz haute pression pour collecter un mélange de gaz inerte, déchargé d'une unité de vulcanisation, et d'un milieu de vulcanisation, un séparateur de vapeur d'eau relié au conduit de récupération de gaz haute pression pour soumettre le mélange à une séparation de vapeur d'eau, un conduit du gaz basse pression pour fournir le gaz inerte, provenant de la séparation de vapeur d'eau, à l'unité de vulcanisation, et un conduit sous pression de gaz supplémentaire reliant le conduit de gaz basse pression à une unité engendrant du gaz inerte.

## Patentansprüche

1. Verfahren zum Regenerieren und Wiederverwenden von Abgas bei der Vulkanisierung mit einem inerten Gas, gekennzeichnet durch die folgenden Verfahrensschritte:
Regenerieren eines Gemisches aus dem inerten Gas, das von einer Vulkanisiereinheit abgegeben wird, und aus einem Vulkanisierungsmedium durch Dampftrennung des Gemisches, Vorformen eines in einer Metallform angeordneten Elastomerprodukts durch Zufuhr des aus der Dampftrennung erhaltenen, inerten Gases zur Vulkanisiereinheit vor dem Beginn der Vulkanisation sowie zusätzliches unter Druck setzen des aus der Dampftrennung erhaltenen, inerten Gases, durch inertes Gas, das man von einem Inertgas-Generator erhält, wenn das aus der Dampftrennung erhaltene, inerte Gas der Vulkanisiereinheit zugeführt werden soll.

2. Anordnung zum Regenerieren und Wiederverwenden von Abgas bei der Vulkanisation

7 **0 050 522** 8

unter Verwendung von inertem Gas bei einem Teil der Vulkanisation von Elastomer-Produkten, mit einer Hochdruck-Gasrückgewinnungsleitung zum Sammeln eines Gemisches aus von einer Vulkanisiereinheit abgegebenem inerten Gas und aus einem Vulkanisiermedium, einer Dampftrenneinheit, die zum Dampftrennen des Gemisches mit der Hochdruck-Gasrückgewinnungsleitung verbunden ist, einer Niederdruck-Gasleitung zur Zufuhr von aus der Dampftrennung erhaltenen, inertem Gas zur Vulkanisiereinheit und mit einer Gaszusatzdruckleitung, die die Niederdruck-Gasleitung mit einem Inertgas-Generator verbindet.

**Fig. 1**

0050 522